# EUROPEAN PATENT APPLICATION

(11) **EP 4 840 908 A1**
(43) Date of publication of application: **18.11.2026**
(21) Application number: 25739107.8
(22) Date of filing: 09.01.2025
(51) Int. Cl.: C08L 83/04, C08K 5/3475, C08G 77/20, C08G 77/12, C08J 3/02

(54) **CROSSLINKED ORGANOPOLYSILOXANE COPOLYMER BLEND AND GEL COMPOSITION COMPRISING SAME**

(30) Priority: 09.01.2024 KR 20240003327; 08.01.2025 KR 20250003012
(71) Applicant: KCC Silicone Corporation, Seoul 06608 (KR)
(72) Inventor: YU, Hyun-Ju, Seoul 06608 (KR); SONG, Hyo-Jin, Seoul 06608 (KR); KIM, In-Su, Seoul 06608 (KR)
(74) Representative: Ipsilon
(86) International application number: PCT/KR2025/000551
(87) International publication number: WO 2025/150947

(57) **Abstract**

Provided are a crosslinked organopolysiloxane copolymer blend and a gel composition including the same. The crosslinked organopolysiloxane copolymer blend, which is prepared, in presence of a platinum catalyst, by reacting an organohydrogen polysiloxane including a hydrogen atom bonded to at least one silicon atom in a molecule, organopolysiloxane including a reactive unsaturated group at opposite terminals thereof, and a benzotriazole-based compound including a reactive unsaturated group, in which the benzotriazole-based compound has a content of at most 10.0 wt% in the crosslinked organopolysiloxane copolymer blend.

## Description

### [Technical Field]

This application claims the benefit of priority to Korean Patent Application Nos. 10-2024-0003327 and 10-2025-0003012, filed in the Korean Intellectual Property Office on January 09, 2024 and January 08, 2025, respectively, the entire contents of which are incorporated herein by reference.

The present disclosure relates to a crosslinked organopolysiloxane copolymer blend and a gel composition including the same.

### [Background Art]

Recently, as the interest in ultraviolet blocking is increased, the attention to an ultraviolet blocking agent, which may exhibit higher ultraviolet protecting effects than that of a conventional technology, has been paid. To this end, there has been emerged a manner for increasing the content of a metal oxide in a cosmetics composition or a manner for employing organic/inorganic ultraviolet absorbers together.

Meanwhile, silicone exhibits higher compatibility with the organic/inorganic ultraviolet absorbers and excellent stability and excellent sensory properties. Accordingly, silicone has been employed as a source material in various fields such as a cosmetic composition. In particular, silicone applied to the cosmetic composition is typically a modified silicone copolymer prepared by reacting an alkenyl group-containing polysiloxane with a Si-H group-containing hydrogen polysiloxane.

To improve the sensory properties of an ultraviolet blocking agent, a gel-phase silicone-containing copolymer blend is rapidly degraded in an ultraviolet blocking index, as the storage time and use time are elapsed, as compared to a product in which the gel-phase silicone-containing copolymer blend is not applied.

There is a need to develop a gel-phase silicone-containing copolymer blend to prevent an ultraviolet blocking index from being decreased, even after stored or used for a long time.

### [Disclosure]

### [Technical Problem]

To solve the problem, an aspect of the present disclosure provides a crosslinked organopolysiloxane copolymer blend and gel composition including the same, which are capable of ensuring excellent storage ability while preventing an ultraviolet blocking index from being decreased even after used for a long time.

### [Technical Solution]

According to another aspect of the present disclosure, there is provided a crosslinked organopolysiloxane copolymer blend, which is prepared, in presence of a platinum catalyst, by reacting an organohydrogen polysiloxane including a hydrogen atom bonded to at least one silicon atom in a molecule, organopolysiloxane including a reactive unsaturated group at opposite terminals, and a benzotriazole-based compound including a reactive unsaturated group, in which the benzotriazole-based compound has a content of at most 10.0 wt% in the crosslinked organopolysiloxane copolymer blend.

Another aspect of the present disclosure, there is provided a gel composition including the crosslinked organopolysiloxane copolymer blend.

### [Advantageous Effects]

According to an embodiment of the present disclosure, the crosslinked organopolysiloxane copolymer blend includes the benzotriazole-based compound having ultraviolet (UVA and UVB) absorbing functions in the structure thereof, thereby effectively preventing an UV blocking index from being decreased. In addition, according to the present disclosure, the crosslinked organopolysiloxane copolymer blend has a crossing linking structure using the organopolysiloxane including the reactive unsaturated group, thereby realizing excellent storage stability and excellent sensory properties.

Accordingly, according to the present disclosure, the gel composition including the crosslinked organopolysiloxane copolymer blend may ensure the excellent sensory properties and the excellent storage stability, thereby effectively preventing the UV blocking index from being decreased due to the use of a gel, as the UV absorbing effect is excellently exhibited.

### [Mode for Invention]

Hereinafter, the present disclosure will be described in detail.

Meanwhile, in this specification, "alkyl" and a substituent including an "alkyl" moiety refer to an organic radical derived from an aliphatic hydrocarbon by removing one hydrogen atom, and include both linear and branched forms.

In addition, in this specification, "alkoxy" refers to an alkyl-O-* group, in which the alkyl follows the above definition.

In addition, in this specification, "alkylene" refers to an organic radical derived from an aliphatic hydrocarbon by removing two hydrogen atoms. In the present specification, only a branched alkylene structure is disclosed.

In addition, in this specification, "halogen" refers to a fluorine (F), chlorine (Cl), bromine (Br), or iodine (I) atom.

In addition, in this specification, the term "comprise" is an open type word having an equivalent meaning to the term "include", "contain", "have", or "characterize", and does not exclude a component, a material, or a process which is not additionally listed.

In addition, a unit used in this specification is based on a weight, unless specified otherwise. For example, the unit of "%" or a "ratio" refers to "weight % (wt %)" or "weight ratio".

In addition, in this specification, the term "molecular weight" refers to a "weight average molecular weight (Mw)" unless defined otherwise, and the "weight average molecular weight (Mw)" of a polymer of the present disclosure may be measured using gel permeation chromatography (GPC). For example, a sample specimen (0.5 wt% in THF) having a specific concentration was filtered using a 0.2 µm PTFE Filter and prepared. Then, a standard specimen (polystyrene (Agilent EasiCal PS-1)) and the sample specimen were injected into a GPC device (Manufacturing company: Waters; Model name: Alliance e2695/2414D (60°C); Eluent: THF (1.0 mL/min), Inj.Volume: 100 µL; Calibration: 580-2,403,000 Da) and analyzed using a refractive index detector, thereby calculating a molecular weight.

In the this specification, "viscosity" may be measured using a Brookfield viscometer (BROOKFIELD HBDV, spindle No. 93, 2.5 rpm) or a Brookfield viscometer (BROOKFIELD HV, spindle No. 18, 14 rpm).

### [Crosslinked organopolysiloxane copolymer blend]

The crosslinked organopolysiloxane copolymer blend according to the present disclosure may be obtained by reacting, in the presence of a platinum catalyst, an organohydrogen polysiloxane including a hydrogen atom bonded to at least one silicon atom in a molecule, an organopolysiloxane including reactive unsaturated groups at opposite terminals, and a benzotriazole-based compound including at least one reactive unsaturated group. The content of the benzotriazole-based compound may be 10.0 wt% or less, in the crosslinked organopolysiloxane copolymer blend.

Hereinafter, ingredients of the crosslinked organopolysiloxane copolymer blend according to the present disclosure will be described in more detail.

### (1) Organohydrogen polysiloxane

The organohydrogen polysiloxane, which is a main component of the crosslinked organopolysiloxane copolymer blend, may be a material for making a crosslinking reaction with the organopolysiloxane, and may have a side chain in which a hydrogen group (Si-H) directly bonded to silicon is incorporated. More specifically, the organohydrogen polysiloxane may be a compound expressed following Chemical Formula 1. 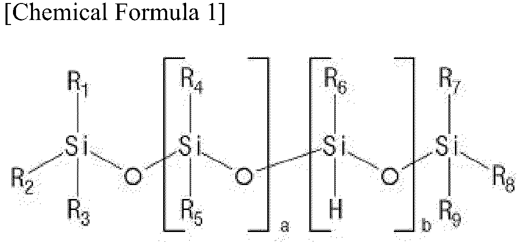 in Chemical Formula 1,
Each of R₁ to R₉ is independently a C1-C10 alkyl group,
a is an integer ranging from 5 to 250,
b is an integer ranging from 1 to 150.

Specifically, in Chemical Formula 1, each of R₁ to R₉ is independently a C1-C7 alkyl group, a is an integer ranging from 5 to 250, and b is an integer ranging from 1 to 150.

In addition, in Chemical Formula 1, each of R₁ to R₉ is independently a C1-C5 alkyl group, a is an integer ranging from 10 to 250, and b is an integer ranging from 1 to 150.

In this case, the alkyl group may be linear or branched.

Specifically, organohydrogen polysiloxane represented by Chemical Formula 1 may include a compound represented by the following Chemical Formula 1A.

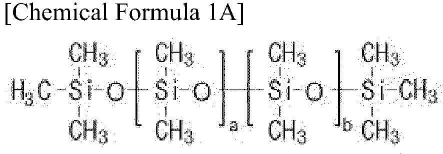

In Chemical Formula 1A,
a is an integer ranging from 5 to 250, and b is an integer ranging from 1 to 150.

Meanwhile, in the organohydrogen polysiloxane, the content of hydrogen groups (SiH) directly bonded to silicon may be 0.05 to 20.0 mmol/g. Specifically, the content of the hydrogen groups (SiH) may range from 0.05 to 17.0 mmol/g, and more specifically range from 0.1 to 15.0 mmol/g.

When the content of hydrogen groups (SiH) directly bonded to silicon in the organohydrogen polysiloxane is within the range, the crosslink density of the prepared crosslinked organopolysiloxane copolymer blend may be appropriately adjusted. Accordingly, thereafter, the crosslinked organopolysiloxane copolymer blend is excellently mixed with a diluent, thereby preparing a uniform paste. Specifically, when the content of the hydrogen group (SiH) directly bonded to silicon in the organohydrogen polysiloxane is at least 0.05 mmol/g, oil absorbency may be changed by adjusting the crosslink density of silicone, thereby improving sensory properties and adhesion. In addition, when the content of the hydrogen group (SiH) directly bonded to silicon in the organohydrogen polysiloxane is at most 20.0 mmol/g, the crosslink density in the crosslinked organopolysiloxane copolymer blend may be controlled to prevent viscosity from being decreasing. Accordingly, the sensory properties such as tackiness may be improved.

In addition, the weight-average molecular weight (Mw) of the organohydrogen polysiloxane may range from 300 to 25,000 g/mol. More specifically, the weight-average molecular weight (Mw) of the organohydrogen polysiloxane may range from 1,000 to 25,000 g/mol or from 1,000 to 15,000 g/mol.

When the weight-average molecular weight (Mw) of the organohydrogen polysiloxane is within the range, the prepared crosslinked organopolysiloxane copolymer blend may be secured in an appropriate viscosity. Accordingly, in sensory properties, spreadability is light, tackiness is reduced, and adhesion is improved. In other words, when the weight-average molecular weight (Mw) of the organohydrogen polysiloxane is at least 300 g/mol, oil absorbency may be improved such that the soft sensory properties and the excellent adhesion are obtained. In addition, when the weight-average molecular weight (Mw) of the organohydrogen polysiloxane is at most 25,000 g/mol, the crosslink density of the crosslinked organopolysiloxane copolymer blend may be improved to decrease the viscosity. Accordingly, the sensory properties such as tackiness may be improved.

In addition, the organohydrogen polysiloxane may be included in the content ranging from 10 wt% to 95 wt%, and specifically, ranging from 10 wt% to 88 wt%, in the crosslinked organopolysiloxane copolymer blend.

When the content of the organohydrogen polysiloxane satisfies the above range, the crosslink density of the prepared crosslinked organopolysiloxane copolymer blend may be controlled to improve the physical properties and the sensory properties of the gel composition described below. Specifically, when the weight-average molecular weight (Mw) of the organohydrogen polysiloxane is at least 10 wt%, the crosslink density and the oil absorbency of the prepared crosslinked organopolysiloxane copolymer blend are improved, thereby providing excellent sensory properties. In addition, when the weight-average molecular weight (Mw) of the organohydrogen polysiloxane is at least 98 wt%, the crosslink density of silicone may be properly formed, thereby ensuring the excellent oil absorbency and the excellent sensory properties.

### (2) Organopolysiloxane having reactive unsaturated groups at opposites terminals

According to an embodiment of the present disclosure, the crosslinked organopolysiloxane copolymer blend may include an organopolysiloxane including reactive unsaturated groups at opposite terminals, such that a crosslinking reaction may be formed with the organohydrogen polysiloxane.

The organopolysiloxane including the reactive unsaturated groups does not include a Si-H group within the structure and includes an alkenyl group and a polysiloxane group at a terminal, as represented by following Chemical Formula 2, to form a crosslinking bond with the organohydrogen polysiloxane. Accordingly, the crosslinked organopolysiloxane copolymer blend and a gel composition described below have advantages in that sensory properties are improved and formulation stability is enhanced. 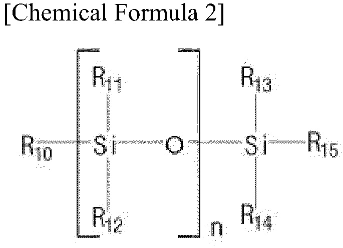 in Chemical Formula 2,
Each of R₁₀ and R₁₅ is independently a C2-C5 alkenyl group,
Each of R₁₁ to R₁₄ is independently a C1-C10 alkyl group, and
n is an integer ranging from 1 to 600.

Specifically, in Chemical Formula 2, each of R₁₀ and R₁₅ is independently a C2-C4 alkenyl group, each of R₁₁ to R₁₄ is independently a C1-C7 alkyl group, and n is an integer from 1 to 570.

Furthermore, in Chemical Formula 2, each of R₁₀ and R₁₅ is independently a C2-C3 alkenyl group, each of R₁₁ to R₁₄ is independently a C1-C5 alkyl group, and 'n' is an integer from 1 to 550.

In this case, the alkyl group and the alkenyl group may be linear or branched.

Specifically, the organopolysiloxane having reactive unsaturated groups represented by Chemical Formula 2 may include a compound represented by following Chemical Formula 2A.

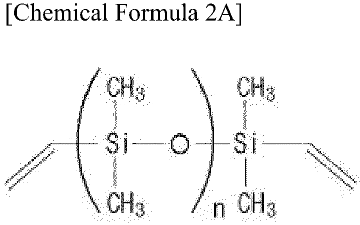

In Chemical Formula 2A,
n is an integer ranging from 1 to 600.

Meanwhile, the content of an alkenyl group in the organopolysiloxane structure may range from 0.01 to 15.0 mmol/g, and specifically from 0.01 to 10.0 mmol/g, and preferably from 0.03 mmol/g to 7 mmol/g.

When the content of an alkenyl group of the organopolysiloxane satisfies the range, a crosslink density may be controlled to enhance the oil absorption capacity, thereby increasing a viscosity of a gel composition to be described later. Specifically, when the alkenyl group content of the organopolysiloxane is at least 0.01 mmol/g, the crosslink density of the crosslinked organopolysiloxane copolymer blend may be increased, and the oil absorption capacity (oil absorbency) may be enhanced, thereby increasing the viscosity. In addition, when the alkenyl group content of the organopolysiloxane is at most 15.0 mmol/g, the crosslink density of the crosslinked organopolysiloxane copolymer blend may be prevented from being excessively increased, thereby enhancing the oil absorbency. When the organopolysiloxane is applied to a formulation, a thickening effect may be improved and the sensory properties may be enhanced.

In addition, the viscosity of the organohydrogen polysiloxane may range from 10 to 10,000 mPa·s, or range from 10 to 1,000 mPa·s. When the viscosity of the organopolysiloxane satisfies the range, the oil absorbency and the sensory properties may be excellently realized.

In addition, the organopolysiloxane may have a weight average molecular weight (Mw) ranging from 100 to 40,000 g/mol or from 100 to 35,000 g/mol. As the weight average molecular weight (Mw) of the organopolysiloxane satisfies the range, the crosslink density of the prepared crosslinked organopolysiloxane copolymer blend may be controlled, thereby enhancing the oil absorbency, such that the smooth sensory properties and the excellent adhesion may be obtained.

Meanwhile, the organopolysiloxan including the reactive unsaturated groups may be mixed in the content ranging from 5 parts by weight to 1,000 parts by weight, specifically from 5 parts by weight to 800 parts by weight, and preferably from 5 parts by weight to 700 parts by weight, based on 100 parts by weight of the organohydrogen polysiloxane. In other words, when organopolysiloxan including the reactive unsaturated groups is at least 10 parts by weight, based on the organohydrogen polysiloxane, the crosslink density may be sufficiently ensured to control the oil absorbency, thereby obtaining a matte feel. In addition, when organopolysiloxan including the reactive unsaturated groups is at most 1,000 parts by weight, based on the organohydrogen polysiloxane, the crosslink density may be decreased to increase the oil absorbency and decrease the viscosity, thereby obtaining a soft feel and excellent adhesion.

Meanwhile, the unit of the organopolysiloxane forming the crosslinking structure in the crosslinked organopolysiloxane copolymer blend may range from 5.0 wt% to 99.0 wt%, specifically, from 5.0 wt% to 95.0 wt%, and preferably, from 5.0 wt% to 90.0 wt%.

When the content of the organopolysiloxane unit is at least 5.0 wt%, an SPF ultraviolet blocking performance and a viscosity of the prepared crosslinked organopolysiloxane copolymer blend may be increased, and the sensory properties of a gel composition to be described later may be improved. Further, when the content of the organopolysiloxane unit is at most 99.0 wt%, the viscosity of the prepared crosslinked organopolysiloxane copolymer blend may be controlled. Accordingly, when the organopolysiloxane unit is applied to a formulation, the sensory properties may be improved and the ultraviolet blocking performance may be obtained.

### (3) Benzotriazole-based compound including reactive unsaturated group

In addition, according to the present disclosure, the crosslinked organopolysiloxane copolymer blend may include a benzotriazole-based compound including the reactive unsaturated group.

The benzotriazole-based compound including the reactive unsaturated group serves as a UV absorber or blocking agent having both UV-A and UV-B absorption characteristics. As represented by following Chemical Formula 3, the benzotriazole-based compound includes a radical-containing functional group at a terminal thereof. Through a crosslinking reaction with the organohydrogen polysiloxane, limitations of the organohydrogen polysiloxane may be compensated. Accordingly, the UV blocking index may be prevented from being decreased. 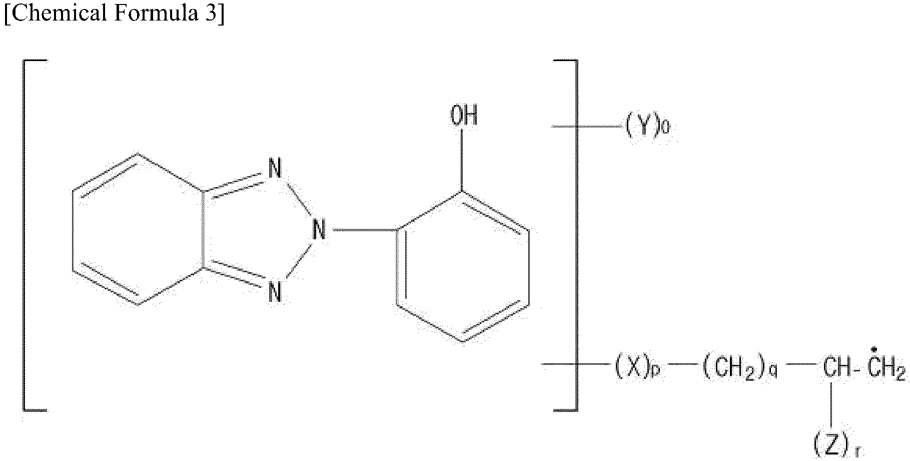 in Chemical Formula 3,
Y is at least one selected from a C1-C8 alkyl group, a halogen group, and a C1-C4 alkoxy group.

X is O or NH.

Z is hydrogen or a C1-C4 alkyl group.

o is an integer from 0 to 3, each of r and p is 0 or 1, and q is an integer ranging from 1 to 10.

Specifically, in Chemical Formula 3, Y may be a C1-C8 alkyl group, X may denote O or NH, Z may be a hydrogen, o may be an integer ranging from 1 to 3, and each of r and p may be 0 or 1, and q may be an integer of 1 to 7.

In addition, in Chemical Formula 3, Y may be a C1-C8 alkyl group, X may denote O or NH, Z may be a hydrogen, o may be an integer ranging from 1 to 3, and each of r and p may be 0 or 1, and q may be an integer of 1 to 5.

Meanwhile, in Chemical Formula 3, o may be an integer of 2 or 3. When Y is a C1-C4 alkoxy group, adjacent Y groups on the same aromatic ring may be bonded to each other to form an alkylidenedioxy group including a C1-C2 alkylidene group.

More specifically, the benzotriazole-based compound including the reactive unsaturated group represented by Chemical Formula 3 may be 2-allyl drometrizole (CAS No. 2170-39-0) represented by the following Chemical Formula 3A or methallyl drometrizole (CAS No. 98809-58-6) represented by the following Chemical Formula 3B.

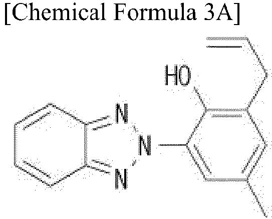

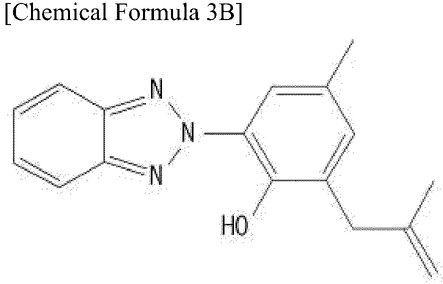

Meanwhile, the weight average molecular weight (Mw) of the benzotriazole-based compound including the reactive unsaturated group may range from 100 to 1,000 g/mol, and specifically, from 100 g/mol to 900 g/mol or from 150 g/mol to 800 g/mol.

When the weight average molecular weight (Mw) of the benzotriazole-based compound including the reactive unsaturated group satisfies the range, the excellent product stability, the excellent sensory properties, and excellent UV blocking effect may be obtained. Meanwhile, when the weight average molecular weight (Mw) of the benzotriazole-based compound including the reactive unsaturated group exceeds 1,000 g/mol, the UV blocking effect may be improved while the reactivity is degraded. Accordingly, unreacted materials may be generated, thereby slightly reducing product stability and sensory properties.

Meanwhile, the benzotriazole-based compound unit may be included in the content of 10.0 wt% or less, specifically, in the content ranging from 0.1 wt% to 10.0 wt%, and more specifically, in the content ranging from 0.3 wt% to 10.0 wt%, in the crosslinked organopolysiloxane copolymer blend.

When the content of the benzotriazole-based compound unit is in the range, the product stability and the sensory properties may be improved, and the UV blocking index may be prevented from being lowered. Specifically, when the content of the benzotriazole-based compound is at least 0.1 wt%, the UV blocking index may be excellently prevented from being decreased. Meanwhile, when the content of the benzotriazole-based compound exceeds 10.0 wt%, the viscosity of the product may be increased to make the difficulty in use. Accordingly, to solve the problem, when the content of the benzotriazole-based compound is at most 10.0 wt%, the product may be easily used, and the sensory properties of a formulation and the UV blocking index may be improved.

### (4) Crosslinked organopolysiloxane copolymer blend

Meanwhile, the crosslinked organopolysiloxane copolymer blend according to the present disclosure may be prepared by reacting, in the presence of a platinum catalyst, an organohydrogen polysiloxane including a hydrogen atom bonded to at least one silicon atom in a molecule, an organopolysiloxane including reactive unsaturated groups at opposite termini, and a benzotriazole-based compound including at least one reactive unsaturated group.

The crosslinked organopolysiloxane copolymer blend may be represented by following Chemical Formula 4. 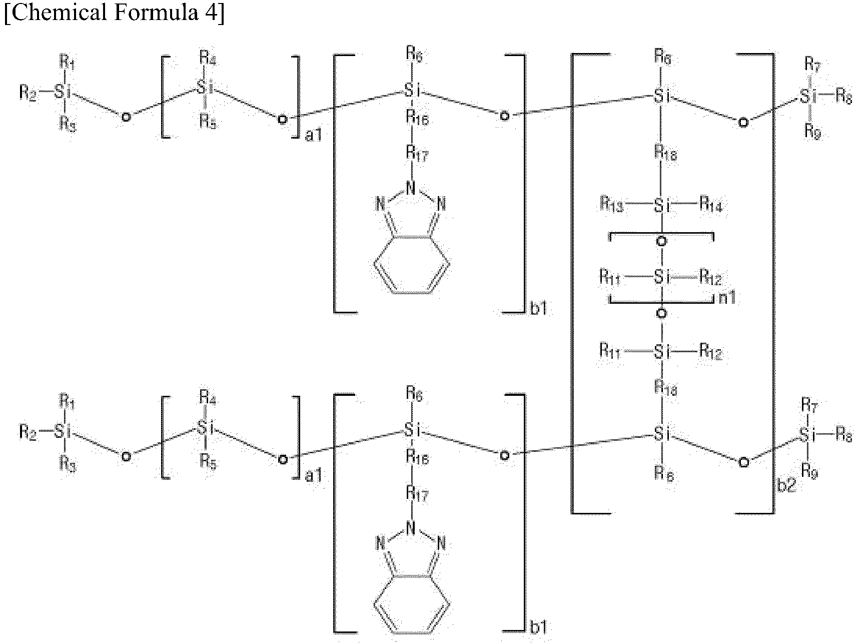 in Chemical Formula 4,
Each of R₁ to R₉ is independently a C1-C10 alkyl group,
Each of R₁₁ to R₁₄ is independently a C1-C10 alkyl group,
Each of R₁₆ and R₁₈ is independently a C1-C10 alkylene group, and
R₁₇ is a C1-C3 alkyl group or a C6-C8 arylene group substituted with a hydroxy group,
a1 is an integer ranging from 10 to 250,
n1 is an integer ranging from 5 to 1,000,
Each of b1 and b2 is independently an integer ranging from 1 to 150.

In other words, according to the present disclosure, the crosslinked organopolysiloxane copolymer blend includes an organohydrogen polysiloxane having, in a main chain unit, a side chain including a Si-H group directly bonded to silicon, and includes, as a substituent of the organohydrogen polysiloxane, a benzotriazole-based compound having excellent ultraviolet blocking properties, thereby preventing a decrease in an ultraviolet blocking index of a gel composition and improving sensory properties of a formulation. Moreover, according to an embodiment of the present disclosure, the crosslinked organopolysiloxane copolymer blend crosslinks the organohydrogen polysiloxane using an organopolysiloxane including reactive unsaturated groups at the opposite terminals thereof, thereby forming a stable bond within a product and enabling implementation of the gel composition from preventing the ultraviolet blocking index from being decreased. Conventional SPF ultraviolet blocking materials in a solid state exhibit insufficient compatibility with a product at room temperature and, when not crosslinked, thereby reducing the stability of the product. In contrast, according to the present disclosure, a crosslinking is performed based on the organohydrogen polysiloxane. to ensure the stability of the gel composition to be described and secure the UV blocking effect.

Specifically, the crosslinked organopolysiloxane copolymer blend represented by Chemical Formula 4 may include a crosslinked organopolysiloxane copolymer blend represented by the following Chemical Formula 4A or Chemical Formula 4B.

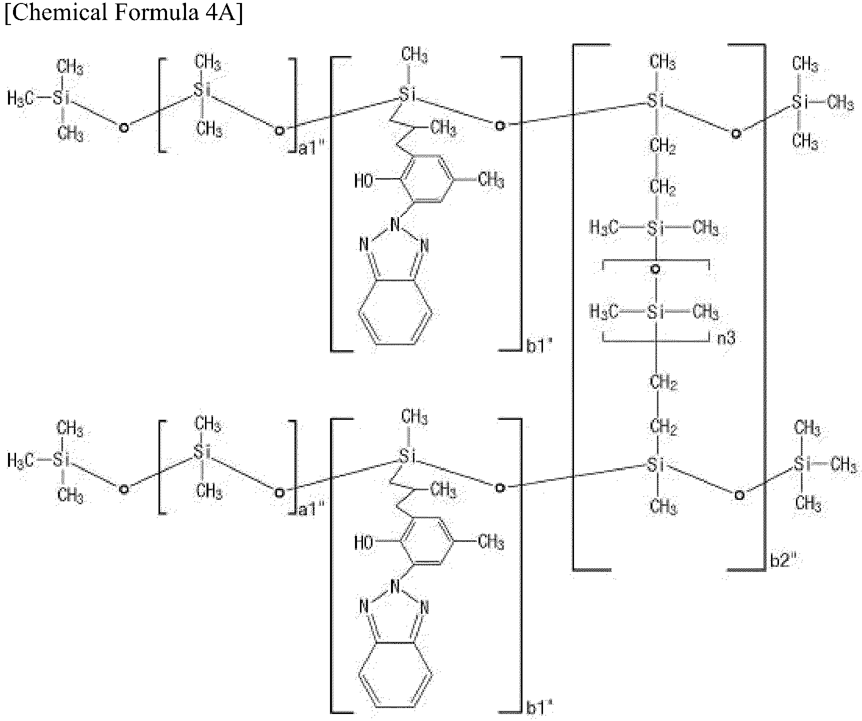

In Chemical Formula 4A,
a1" is an integer ranging from 10 to 250,
Each of b1" and b2" is independently an integer ranging from 1 to 150.

n3 is an integer ranging from 5 to 1,000,
In this case, b1"+ b2" may be understood as an integer of at most 150.

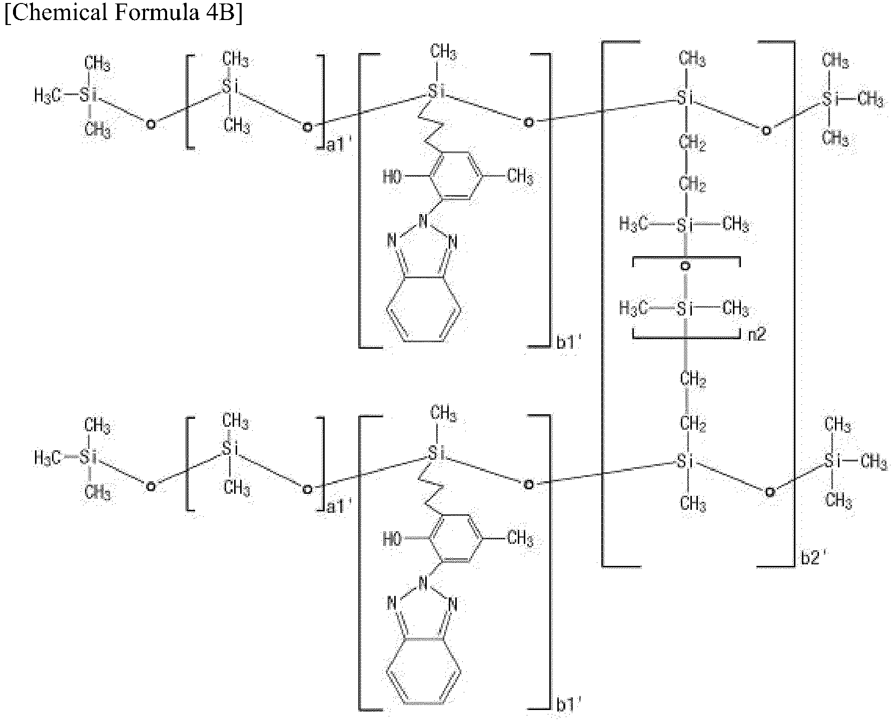

In Chemical Formula 4B,
a1' is an integer ranging from 10 to 250,
Each of b1' and b2' is independently an integer ranging from 1 to 150.
n2 is an integer ranging from 5 to 1,000,
In this case, b1' and b2' may be understood as an integer of at most 150.

Meanwhile, according to the present disclosure, the crosslinked organopolysiloxane copolymer blend may be prepared by reacting, in the presence of a platinum catalyst, an organohydrogen polysiloxane including a hydrogen atom bonded to at least one silicon atom in a molecule, an organopolysiloxane including reactive unsaturated groups at opposite terminals, and a benzotriazole-based compound including at least one reactive unsaturated group.

In detail, according to the present disclosure, the crosslinked organopolysiloxane copolymer blend may be prepared through a method including the steps for: introducing an organohydrogen polysiloxane including a hydrogen atom bonded to at least one silicon atom in a molecule, and a benzotriazole-based compound including a reactive unsaturated group, into a first solvent, and reacting the organohydrogen polysiloxan, the benzotriazole-based compound, and the first solvent with each other in the presence of a first platinum catalyst, to prepare a modified organohydrogen polysiloxane copolymer blend represented by Chemical Formula 5; removing the first solvent; and introducing the modified organohydrogen polysiloxane copolymer blend prepared, an organohydrogen polysiloxane including a reactive unsaturated group, and a second solvent and reacting the modified organohydrogen polysiloxane copolymer blend prepared, the organohydrogen polysiloxane, and the second solvent with each other in the presence of a second platinum catalyst to prepare a crosslinked organopolysiloxane copolymer blend present in a solid phase and represented by Chemical Formula 4. 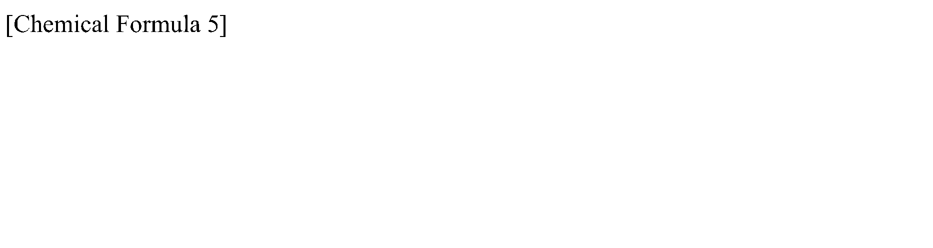 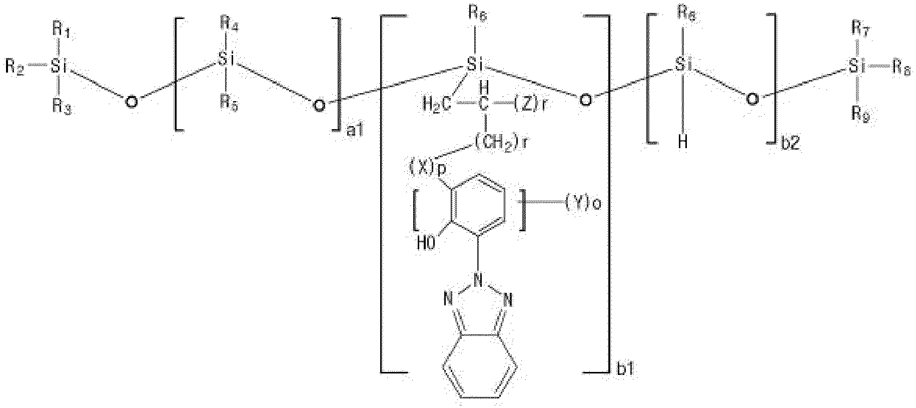 in Chemical Formula 5,
Each of R₁ to R₉ is independently a C1-C10 alkyl group,
Y is at least one selected from a C1-C8 alkyl group, a halogen group, and a C1-C4 alkoxy group.

X is O or NH.

Z is hydrogen or a C1-C4 alkyl group.

o is an integer ranging from 0 to 3,

r and p is 0 or 1,

q is an integer ranging from 1 to 10,

a1 is an integer ranging from 10 to 250,

Each of b1 and b2 is independently an integer ranging from 1 to 150.

In this case, b1+b2 may be understood as an integer of at most 150.

Meanwhile, the benzotriazole-based compound including the reactive unsaturated group may be mixed in the content ranging from 1.0 to 90 parts by weight, specifically, from 1.0 to 80 parts by weight, preferably from 3.0 to 80 parts by weight, based on 100 parts by weight of the organohydrogen polysiloxane. In other words, when the amount of the organopolysiloxane including the reactive unsaturated group relatively to the organohydrogen polysiloxane is at least 1.0 part by weight, the UV blocking index may be prevented from being decreased and the product viscosity may be increased. In addition, when the amount of the organopolysiloxane including the reactive unsaturated group relatively to the organohydrogen polysiloxane is at most 90 parts by weight, the UV blocking index may be prevented and the unique soft sensory properties of the gel composition to be described later may be achieved.

Meanwhile, the first solvent used to prepare the modified organohydrogen polysiloxane copolymer blend represented by Chemical Formula 5 may be employed for a non-silicone-based solvent. Representative non-silicone-based solvents may include at least one selected from the group consisting of isododecane, undecane, tridecane, and C13-C15 alkane oil. Specifically, the representative non-silicone-based solvent may include Isopar E (Naphtha (petroleum), or light alkylate Isoparaffinic Hydrocarbon Solvent.

The non-silicone-based solvent may be used in an amount of 10 to 500 parts by weight, specifically 20 to 400 parts by weight, based on 100 parts by weight of the organohydrogen polysiloxane. When the amount of the non-silicone-based solvent is less than 10 parts by weight, the benzotriazole source material does not dissolve, and thus a reaction may not be made. When the amount is greater than 500 parts by weight, an excessive amount of the solvent is added, thereby requiring an additional solvent removal step and potentially reducing production efficiency. When the amount of the non-silicone-based solvent satisfies the above range, the viscosity of the reactant may be controlled, thereby ensuring excellent reactivity.

Meanwhile, the non-silicone-based solvent may be removed through a reduced-pressure distillation process after the reaction is finished.

The first platinum catalyst, which is to enhance the reaction between the organohydrogen polysiloxane and the benzotriazole-based compound, may include any one selected from the group consisting of platinum 1,3-diethenyl-1,1,3,3-tetramethyldisiloxane complexes (CAS No. 68478-92-2), platinum metal, platinum supported on alumina, platinum supported on silica, platinum supported on carbon black, platinum-vinylsiloxane complexes, platinum-phosphine complexes, platinum-phosphite complexes, and platinum alkoxide catalysts, which is represented by following Chemical Formula 6. The first platinum catalyst and the second platinum catalyst may be the same as each other or different from each other. Specifically, the first platinum catalyst may include Platinum 1,3-diethenyl-1,1,3,3-tetramethyldisiloxane complexes (CAS no: 68478-92-2)

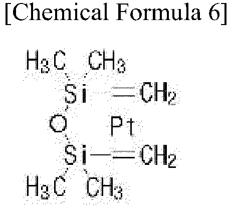

The first platinum catalyst may be used in an amount of 0.01 to 3.0 parts by weight, specifically 0.1 to 2.0 parts by weight, based on 100 parts by weight of the organohydrogen polysiloxane. When the use of the first platinum catalyst satisfies the range, the excellent reactivity may be ensured. Meanwhile, when the use of the first platinum catalyst is less than 0.01 parts by weight, the reaction between the organohydrogen polysiloxane and the benzotriazole-based compound including the reactive unsaturated group may be slightly made. When the use of the first platinum catalyst exceeds 3 parts by weight, the reaction between the organohydrogen polysiloxane and the benzotriazole-based compound including the reactive unsaturated group may significantly rapidly made, thereby causing the side reaction. Accordingly, a reaction is not uniformly made in each mixture polymer, but a product having a more rapid reactivity reacts first. In this case, the use of the first platinum catalyst may affect the crosslink density of the crosslinked organopolysiloxane copolymer blend formed in a subsequent reaction, thereby causing variations in sensory properties.

Meanwhile, when the modified organohydrogen polysiloxane copolymer blend is prepared, the reaction temperature may range from 50 °C to 95 °C, and specifically, range from 60 °C to 95 °C, and the reaction time may range from 1 hour to 4 hours. The side reaction may be minimized, as the reaction temperature and the reaction time are controlled to be in the range, the side reaction, thereby ensuring the excellent crosslinking bonding.

Meanwhile, when the viscosity of a gel blend, which is obtained by mixing the modified organohydrogen polysiloxane copolymer blend represented by Chemical Formula 5 with diluent oil, is measured using a Brookfield viscometer (BROOKFIELD HBDV, spindle No. 93, 2.5 rpm) at 25°C, the viscosity may range from 100 cp to 1,000 cp.

Meanwhile, the second solvent used when the crossed organopolysiloxane copolymer blend is prepared may include a silicone-based solvent or a non-silicone-based solvent.

The silicone-based solvent is not particularly limited, as long as the silicone-based solvent is a silicone-based organic compound, which is a high-viscosity solvent in a liquid phase at room temperature (having a viscosity ranging from 1 cP to 50 cP at room temperature), does not react with the modified organohydrogen polysiloxane copolymer blend or the organopolysiloxane including the reactive unsaturated group, does not interfere with a crosslinking reaction, and has properties suitable for use as a diluent for diluting a mixture thereof. For example, representatively, the silicone-based solvent may include cyclosiloxane or polydimethylsiloxane. Preferably, the silicone-based solvent may include polydimethylsiloxane (CAS No. 63148-62-9; weight-average molecular weight of 200 to 2,000 g/mol; trade name: SeraSense SF6).

In addition, the non-silicone-based solvent may include at least one of isododecane, undecane, tridecane, ISOPAR-E (hydrotreated heavy naphtha (petroleum)), and a C13-C15 alkane oil, and may be the same as or different from the first solvent.

The second solvent may be used in an amount ranging from 100 to 2,000 parts by weight, specifically 100 to 1,700 parts by weight, based on 100 parts by weight of the modified organohydrogen polysiloxane copolymer blend. When the amount of the non-silicone-based solvent satisfies the above range, the viscosity of the reactant may be controlled, thereby ensuring excellent reactivity.

Meanwhile, the second platinum catalyst, which is a catalyst for increasing crosslinking reactivity between the modified organohydrogen polysiloxane copolymer blend and the organopolysiloxane, may be the same as or different from the first platinum catalyst. Specifically, the second platinum catalyst may be platinum 1,3-diethenyl-1,1,3,3-tetramethyldisiloxane complexes (CAS: 68478-92-2)

The second platinum catalyst may be used in an amount of 0.001 to 3 parts by weight, specifically 0.001 to 0.5 parts by weight, based on 100 parts by weight of the organohydrogen polysiloxane. When the usage of the second platinum catalyst satisfies the range, the excellent reactivity may be ensured. Meanwhile, when the amount of the second platinum catalyst is less than 0.001 parts by weight, a crosslinked structure may be insufficiently formed. When the amount exceeds 3 parts by weight, the reaction proceeds excessively rapidly, thereby inducing the side reaction to affect the crosslink density of the crosslinked organopolysiloxane copolymer blend. Accordingly, it is difficult to form the crosslinked organopolysiloxane copolymer blend having the desired crosslinked structure. Accordingly, the sensory properties may vary and an effect of suppressing a decrease in an ultraviolet protecting index may be insignificant.

Meanwhile, when the crosslinked organopolysiloxane copolymer blend is prepared, the reaction temperature may range from 50°C to 95°C, specifically, 55°C to 90°C, and the reaction time may be within five hours. As the reaction temperature and the reaction time are controlled to be in the range, the non-reaction may be minimized, thereby ensuring the excellent crosslinking bonding.

Meanwhile, according to the present disclosure, the step for a purifying operation may be further performed to obtain the prepared crosslinked organopolysiloxane copolymer blend having higher purity. For example, after the crosslinked organopolysiloxane copolymer blend prepared in the solid phase is obtained in a reactor, a roll-mill process is performed to pulverize the crosslinked organopolysiloxane copolymer blend in the solid phase. Then, the result is reintroduced into the reactor, and a diluent is additionally added. Subsequently, the result is stirred and filtered to remove impurities such that the crosslinked organopolysiloxane copolymer blend having the higher purity is prepared.

### [Gel Composition]

In addition, the present disclosure provides a gel composition including the crosslinked organopolysiloxane copolymer blend.

Hereinafter, components of the gel composition according to the present disclosure will be described in detail.

### (1) Crosslinked organopolysiloxane copolymer blend

First, according to the present disclosure, the gel composition may include a crosslinked organopolysiloxane copolymer blend represented by Chemical Formula 5.

In this case, the description about the crosslinked organopolysiloxane copolymer blend has been already made above, so the details thereof will be omitted.

However, the crosslinked organopolysiloxane copolymer blend may be included in a content ranging from 10 wt% to 70 wt%, based on the total weight of the gel composition. More specifically, the crosslinked organopolysiloxane copolymer blend may be included in a content ranging from 10 wt% to 60 wt%. More specifically, the crosslinked organopolysiloxane copolymer blend may be included in a content ranging from 20 wt% to 60 wt%.

When the amount of the crosslinked organopolysiloxane copolymer blend satisfies the range, the storage stability and the sensory properties may be improved, and a composition for providing the UV blocking index may be obtained.

### (2) Diluent

The diluent, which adjusts a viscosity of the gel composition to improve usability of the composition and to enhance dilution stability and emulsion stability of the gel composition, may include silicone oil and organic oil.

Specifically, for example, the silicone oil may include organopolysiloxanes, such as dimethylpolysiloxane and a copolymer of dimethylsiloxane and methylphenylsiloxane; and cyclic siloxanes, such as octamethylcyclotetrasiloxane, decamethylcyclopentasiloxane, dodecamethylcyclohexasiloxane, tetramethyltetrahydrogencyclotetrasiloxane, and tetramethyltetraphenylcyclotetrasiloxane.

The organic oil, which is a non-silicone-based solvent, may include at least one of isododecane, undecane, tridecane, and a C13-C15 alkane oil.

The diluent may have the viscosity ranging from 0.1 cP to 100 cP, at 25°C. Specifically, the diluent may have the viscosity ranging from 0.5 cp to 100 cp, or from 1 cp to 100 cp at 25°C. When the viscosity of the diluent at 25°C is in the above range, the emulsion stability may be improved.

In addition, the diluent may be included in an appropriate amount such that the crosslinked organopolysiloxane copolymer blend is present at a concentration ranging from 10 wt% to 90 wt% based on the total weight of the gel composition. When the diluent is included in the content range, the dilution stability and emulsion stability of the gel composition are improved.

Meanwhile, the viscosity of the gel composition, as measured at 25°C using a Brookfield viscometer (BROOKFIELD HV, spindle No. 18, 14 rpm), may be 150,000 to 5,000,000 cP, specifically 150,000 to 4,000,000 cP, and preferably 200,000 to 3,000,000 cP. When the viscosity of the gel composition at 25°C is within the above range, a UV blocking agent formulation having excellent viscosity and sensory properties may be achieved.

Meanwhile, according to an embodiment of the present disclosure, the gel composition may be included in a conventional cosmetic composition and may be formulated in the form of a solution, a suspension, an emulsion, a paste, a gel, a cream, a lotion, or a spray. For example, the gel composition may be in the form of a solubilized type, an O/W emulsion type, a W/O emulsion type, or an oil-based type. As described above, according to the present disclosure, the gel composition may secure storage stability even during long-term storage, and may prevent an ultraviolet blocking index from being decreased, thereby obtained excellent sensory properties.

Hereinafter, Examples will be described in detail to be described the details of the present disclosure. However, embodiments of the present disclosure may have various modifications, and the scope of the present disclosure is not limited to following embodiments. The embodiments of the present disclosure are provided to describe the present disclosure for those skilled in the art more completely.

First, a product name, an ingredient, or a physical property of each component used in the following Embodiments and Comparative examples are illustrated in following Table 1.

**[Table 1]**

| Ingredient | | Manufacturer and/or product name | Physical property | |
|---|---|---|---|---|
| Organohydrogen polysiloxane | | Siloxanes and Silicones, di-Me, Me hydrogen (CAS:: 68037-59-2) 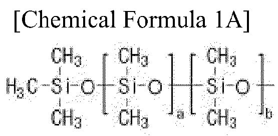 | (1) | in Chemical Formula 1, a = 108, b =10 |
| | | | | SiH content: 1.1 mmol/g, Mw: 8,745 g/mol |
| | | | (2) | in Chemical Formula 1A, a = 27, b = 2 |
| | | | | SiH content: 1 mmol/g, Mw: 2,286 g/mol |
| | | | (3) | in Chemical Formula 1A, a = 60,and b = 3 |
| | | | | SiH content: 0.6 mmol/g, Mw: 5,285 g/mol |
| | | | (4) | in Chemical Formula 1A, a = 36, b = 121 |
| | | | | SiH content: 12.0 mmol/g, Mw: 10,100 g/mol |
| Benzotriazole-based compound | | Methallyl drometrizole (CAS : 98809-58-6) | (1) | Mw : 279 g/mol |
| | | | 2. | Mw : 700 g/mol |
| | | 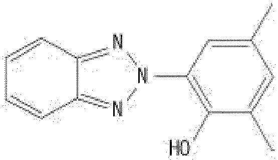 | | |
| | | 2-Allyl drometrizole (CAS : 2170-39-0) 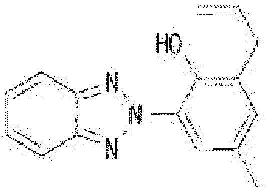 | (3) | Mw : 265 g/mol |
| Platinum catalyst | | HERAEUS PRECIOUS METALS NA, LLC (Platinum-(0)-1,3-divinyl-1,1,3,3-tetramethylDisiloxane) (CAS : 68478-92-2) | | Platinum content: 1 wt% |
| First solvent | Non-silicone-based solvent | Isoparaffinic Hydrocarbon Solvent (product name: Isopar E) or isododecane(IDD, Presperse Incorporated) | | |
| Organopolysiloxane | | Siloxanes and Silicones, di-Me, vinyl group-terminated (CAS : 68083-19-2) 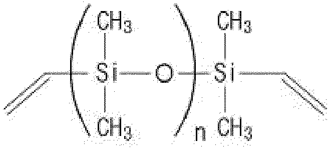 | (1) | N = 20 |
| | | | | Alkenyl content: 1.2 mmol/g |
| | | | | Mw: 1,667 g/mol |
| | | | (2) | N = 150 |
| | | | | Alkenyl content: 0.17 mmol/g |
| | | | | Mw: 10,900 g/mol |
| | | | (3) | N = 224 alkenyl content: 0.12 mmol/g |
| | | | | Mw: 17,000 g/mol |
| | | | (4) | N = 2 alkenyl content: 6 mmol/g |
| | | | | Mw: 334 g/mol |
| | | | (5) | N = 505 |
| | | | | Alkenyl content: 0.053 mmol/g |
| | | | | Mw: 32,788 g/mol |
| Second solvent | Silicone-based solvent | Siloxanes and Silicones, di-Me (CAS : 63148-62-9) 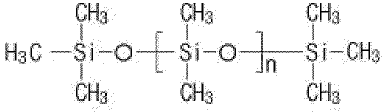 | | N = 12 / MW= 1,050 g/mol |
| | Non-silicone-based solvent | Isododecane | | |
| Diluent | | 5% of silicone oil (Dimethylpolysiloxane) | | |

### Examples 1 to 15 and Comparative Examples 1 to 4

### (Preparation of crosslinked organopolysiloxane copolymer blend)

Organohydrogen polysiloxanes (1) and (2) represented by Chemical Formula 1A and a benzotriazole-based compound represented by Chemical Formula 3A were sequentially introduced in ISOPAR E (Isoparaffinic Hydrocarbon Solvent) serving as a non-silicone-based solvent. Then, the result was stirred for two hours while a temperature was increased to 75°C and homogenized. Thereafter, a platinum catalyst (CAS No. 68478-92-2, HERAEUS PRECIOUS METALS NA, LLC) represented by Chemical Formula 6 was introduced and stirred for two hours, thereby preparing the gel composition including the modified organohydrogen polysiloxane copolymer blend represented by Chemical Formula 4A. In this case, ingredients were mixed at a composition ratio as illustrated in following Tables 2 to 3

Thereafter, after finishing the reaction, the non-silicone-based solvent was removed using a reduced-pressure distillation device to obtain a gel-form modified organohydrogen polysiloxane copolymer blend represented by Chemical Formula 5.

Then, a polysiloxane (manufactured by KCC) as a silicone-based solvent and an organopolysiloxane (1) represented by Chemical Formula 2A were introduced into the modified organohydrogen polysiloxane copolymer blend in the gel form prepared and the platinum catalyst represented by Chemical Formula 6 was introduced while the temperature was increased to 55°C. Then, the result was stirred for 3 hours at the temperature of at least 60°C and homogenized, thereby preparing the crosslinked organopolysiloxane copolymer blend in a solid phase, which was represented by Chemical Formula 4A. In this case, the ingredients were mixed at a composition ratio as illustrated in following Tables 2 to 5

### (Preparation of gel composition)

A gel composition was prepared by mixing each of the crosslinked organopolysiloxane copolymers prepared in the above Examples and Comparative Examples with a diluent (silicone oil) such that the content thereof was to at most 55 wt%.

**[Table 2]**

| Weight (g) | | Embodiment | | | | |
|---|---|---|---|---|---|---|
| | Ingredient name | 1 | 2 | 3 | 4 | 5 |
| Prepara tion of modifie d organo hydrog en polysil oxane copoly mer blend | Organohydrogen polysiloxane (1) | 24.69 | 24.69 | 18.73 | 11.86 | 31.65 |
| | Organohydrogen polysiloxane (2) | 37.03 | 37.03 | 28.1 | 17.8 | 47.48 |
| | Organohydrogen polysiloxane (3) | - | - | - | - | - |
| | Organohydrogen polysiloxane (4) | - | - | - | - | - |
| | Benzotriazole-based compound (1)-MD | 6.15 | - | 8.56 | 11.33 | 3.34 |
| | Benzotriazole-based compound (2)-MD | - | - | - | - | - |
| | Benzotriazole-based compound (3)-2AD | - | 6.15 | - | - | - |
| | Platinum catalyst | 0.14 | 0.14 | 0.11 | 0.08 | 0.17 |
| | Non-silicone-based solvent | 31.99 | 31.99 | 44.5 | 58.93 | 17.36 |
| | IDD | - | - | - | - | - |
| Crossli nked organo polysil | Modified organohydrogen polysiloxane copolymer blend | 16.91 | 16.91 | 20.66 | 28.15 | 14.8 |
| | Organopolysiloxane (1) | 13.87 | 13.87 | 10.13 | 2.63 | 15.98 |
| | Organopolysiloxane (2) | - | - | - | - | - |
| oxane copoly mer blend Prepara tion | Organopolysiloxane (3) | - | - | - | - | - |
| | Organopolysiloxane (4) | - | - | - | - | - |
| | Organopolysiloxane (5) | - | - | - | - | - |
| | Platinum catalyst | 0.02 | 0.02 | 0.02 | 0.02 | 0.02 |
| | Silicone-based solvent | 69.2 | 69.2 | 69.19 | 69.2 | 69.2 |
| | IDD | - | - | - | - | - |
| Content (wt%) of benzotriazole-based compound in crosslinked organopolysiloxane copolymer blend | | 1.5 | 1.5 | 3.1 | 7.77 | 0.6 |
| Solid content (105 °C; 3 hours; 3 g) | | 94.5 | 94.7 | 95.5 | 95.2 | 95.2 |

**[Table 3]**

| Weight (g) | | Example | | | | |
|---|---|---|---|---|---|---|
| | Ingredient name | 6 | 7 | 8 | 9 | 10 |
| Prepara tion of modifie d organo hydrog | Organohydrogen polysiloxane (1) | - | 24.69 | 24.69 | 24.69 | 21.9 |
| | Organohydrogen polysiloxane (2) | - | 37.03 | 37.03 | 37.03 | 32.86 |
| | Organohydrogen polysiloxane (3) | 7.09 | - | - | - | - |
| | Organohydrogen polysiloxane (4) | 10.63 | - | - | - | - |
| | Benzotriazole-based compound (1)-MD | 13.26 | 6.15 | 6.15 | 6.15 | 7.28 |
| en polysil oxane copoly mer blend | Benzotriazole-based compound (2)-MD | - | - | - | - | - |
| | Benzotriazole-based compound (3)-2AD | - | - | - | - | - |
| | Platinum catalyst | 0.06 | 0.14 | 0.14 | 0.14 | 0.12 |
| | Non-silicone-based solvent | 68.96 | 31.99 | 31.99 | 31.99 | 37.84 |
| | IDD | - | - | - | - | - |
| Prepara tion of crosslin ked organo polysil oxane copoly mer blend | Modified organohydrogen polysiloxane copolymer blend | 6.31 | 27.33 | 5.64 | 4.21 | 18.3 |
| | Organopolysiloxane (1) | 24.47 | - | - | - | 12.48 |
| | Organopolysiloxane (2) | - | - | 25.14 | - | - |
| | Organopolysiloxane (3) | - | - | - | 26.58 | - |
| | Organopolysiloxane (4) | - | 3.45 | - | - | - |
| | Organopolysiloxane (5) | - | - | - | - | - |
| | Platinum catalyst | 0.01 | 0.03 | 0.01 | 0.01 | 0.02 |
| | Silicone-based solvent | 69.21 | 69.19 | 69.21 | 69.2 | 69.2 |
| | IDD | - | - | - | - | - |
| Content (wt%) of benzotriazole-based compound in crosslinked organopolysiloxane copolymer blend | | 2.7 | 1.6 | 0.51 | 0.38 | 2.15 |
| Solid content (105 °C; 3 hours; 3 g) | | 95 | 94.8 | 95.3 | 95.3 | 94.6 |

**[Table 4]**

| Weight (g) | | Example | | | | |
|---|---|---|---|---|---|---|
| | Ingredient name | 11 | 12 | 13 | 14 | 15 |
| Preparatio n of modified organohyd rogen polysiloxa ne copolymer blend | Organohydrogen polysiloxane (1) | 28.29 | 16.36 | 24.69 | 24.69 | 20.41 |
| | Organohydrogen polysiloxane (2) | 42.43 | 24.55 | 37.03 | 37.03 | 30.62 |
| | Organohydrogen polysiloxane (3) | - | - | - | - | - |
| | Organohydrogen polysiloxane (4) | - | - | - | - | - |
| | Benzotriazole-based compound (1)-MD | 4.7 | 9.51 | - | 6.15 | 5.09 |
| | Benzotriazole-based compound (2)-MD | - | - | 6.15 | - | - |
| | Benzotriazole-based compound (3)-2AD | - | - | | - | - |
| | Platinum catalyst | 0.15 | 0.11 | 0.14 | 0.14 | 0.11 |
| | Non-silicone-based solvent | 24.43 | 49.47 | 31.99 | 31.99 | - |
| | IDD | - | - | - | - | 43.77 |
| Crosslinke d organopoly siloxane copolymer | Modified organohydrogen polysiloxane copolymer blend | 15.65 | 23.44 | 16.91 | 16.91 | 19.48 |
| | Organopolysiloxane (1) | 1.13 | 7.35 | 13.87 | 13.87 | 15.98 |
| | Organopolysiloxane (2) | - | - | - | - | - |
| | Organopolysiloxane (3) | - | - | - | - | - |
| blend Preparatio n | Organopolysiloxane (4) | - | - | - | - | - |
| | Organopolysiloxane (5) | - | - | - | - | - |
| | Platinum catalyst | 0.02 | 0.02 | 0.02 | 0.02 | 0.02 |
| | Silicone-based solvent | 69.2 | 69.19 | 69.2 | - | - |
| | IDD | - | - | - | 69.2 | 64.52 |
| Content (wt%) of benzotriazole-based compound in crosslinked organopolysiloxane copolymer blend | | 0.98 | 4.42 | 1.53 | 1.5 | 1.5 |
| Solid content (105 °C; 3 hours; 3 g) | | 94.3 | 93.8 | 94.8 | 97.6 | 95.1 |

**[Table 5]**

| Weight (g) | | Comparative example | | | |
|---|---|---|---|---|---|
| | Ingredient name | 1 | 2 | 3 | 4 |
| Preparation of modified organohydrogen polysiloxane copolymer blend | Organohydrogen polysiloxane (1) | 24.69 | 24.95 | 8.88 | 24.69 |
| | Organohydrogen polysiloxane (2) | 37.03 | 37.43 | 13.32 | 37.03 |
| | Organohydrogen polysiloxane (3) | - | 2.75 | - | - |
| | Organohydrogen polysiloxane (4) | - | - | - | - |
| | Benzotriazole-based compound (1)-MD | 6.15 | - | 12.54 | 6.15 |
| | Benzotriazole-based compound (2)-MD | - | - | - | - |
| | Benzotriazole-based compound | - | - | - | - |
| | (3)-2AD | | | | |
| | Platinum catalyst | - | 0.16 | 0.07 | 0.14 |
| | Non-silicone-based solvent | 32.13 | 34.71 | 65.19 | 31.99 |
| | IDD | - | - | - | - |
| Crosslinked organopolysilox ane copolymer blend Preparation | Modified organohydrogen polysiloxane copolymer blend | 16.91 | - | 28.44 | 2.01 |
| | Organopolysiloxane (1) | 13.87 | - | 2.34 | - |
| | Organopolysiloxane (2) | - | 3.44 | - | - |
| | Organopolysiloxane (3) | - | 12.45 | - | - |
| | Organopolysiloxane (4) | - | - | - | - |
| | Organopolysiloxane (5) | - | - | - | 28.78 |
| | Platinum catalyst | 0.02 | 0.03 | 0.02 | 0.01 |
| | Silicone-based solvent | 69.2 | 64 | 69.2 | 69.2 |
| | IDD | - | 0 | - | - |
| Content (wt%) of benzotriazole-based compound in crosslinked organopolysiloxane copolymer blend | | 1.5 | 0 | 10.26 | 0.18 |
| Solid content (105°C; 3 hours; 3 g) | | 93.9 | 94.7 | 94.7 | 94.3 |

### Experimental example

### Evaluation of physical properties of gel composition

The physical properties of the gel compositions prepared according to Examples 1 to 15 and Comparative Examples 1 to 4 were measured and evaluated according to the following manners, and the results are shown in Tables 5 to 7.

### (1) Appearance and color

The appearance of the gel composition was evaluated by visually observing the color at 25°C.

### (2) Viscosity (A)

The viscosity (A) of the gel blend product, which was obtained by mixing the gel-phase modified organohydrogen polysiloxane copolymer blend with diluting oil, was measured at 25 °C using a Brookfield viscometer (BROOKFIELD HBDV, spindle #93, 2.5 rpm).

### (3) Viscosity (B)

The viscosity (B) of the gel composition was measured at 25°C using a Brookfield viscometer (BROOKFIELD HV, spindle #18, 14 rpm).

### (4) Product stability

The gel composition was stored at 25°C or 50°C for 7 days, and the product stability of the gel composition was evaluated. The results were averaged. In this case, the results of the product stability evaluation were rated on a scale of 1 to 5. Specifically, when no phase separation occurred in the gel composition after storage, for example, when the most excellent product stability was exhibited, the scale was marked by 5, and when phase separation was visually observed in the gel composition, for example, when the product stability was significantly deteriorated, the scale was marked by 1, thereby evaluated the product stability for the gel composition.

### (5) Sensory properties (Feel Film)

Sensory properties of the gel composition were evaluated with respect to 10 panelists using following evaluation items, and the results were averaged.
- Evaluation items: application property (spreadability) of composition, smoothness, and adhesion of composition.
- Rating scale: 5 (significantly superior), 4 (superior), 3 (average), 2 (inferior), and 1 (significantly inferior).

### (6) SPF index evaluation

The ultraviolet blocking index (SPF, in vitro) of the gel composition was measured using a conventional method with an SPF-290S Analyzer.

**[Table 6]**

| | Example | | | | | |
|---|---|---|---|---|---|---|
| | 1 | 2 | 3 | 4 | 5 | 6 |
| Appearance | Transparent -opaque paste | Transparent -opaque paste | Transparent -opaque paste | Transparent -opaque paste | Transparent -opaque paste | Transparent -opaque paste |
| Gel content | 31 | 31 | 31 | 55 | 31 | 31 |
| Color | Yellow | Yellow | Yellow | Yellow | Yellow | Yellow |
| Viscosity (1) | 202 | 210 | 210 | 500 | 250 | 150 |
| Viscosity (2) | 980,000 | 1,050,000 | 1,500,000 | 2,000,000 | 600,000 | 800,000 |
| Product stability | 5 | 5 | 5 | 4 | 4 | 3 |
| Sensory properties | 5 | 5 | 4 | 3 | 4 | 3 |
| SPF index | 67 | 66 | 64 | 70 | 60 | 60 |

**[Table 7]**

| | Example | | | | | |
|---|---|---|---|---|---|---|
| | 7 | 8 | 9 | 10 | 11 | 12 |
| Appearance | Transparent-opaque paste | Transpare nt-opaque paste | Transparent-opaque paste | Transparent -opaque paste | Transparent-opaque paste | Transparent-opaque paste |
| Gel content | 31 | 31 | 31 | 31 | 31 | 28 |
| Color | Yellow | Yellow | Yellow | Yellow | Yellow | Yellow |
| Viscosity (1) | 202 | 210 | 202 | 202 | 202 | 450 |
| Viscosity (2) | 530,000 | 800,000 | 700,000 | 185,000 | 1,200,000 | 1,700,000 |
| Product stability | 3 | 4 | 4 | 3 | 5 | 5 |
| Sensory properties | 3 | 3 | 3 | 3 | 3 | 4 |
| SPF index | 42 | 55 | 59 | 45 | 46 | 53 |

**[Table 8]**

| | Example | | |
|---|---|---|---|
| | 13 | 14 | 15 |
| Appearance | Transparent-opaque paste | Transparent-opaque paste | Transparent-opaque paste |
| Gel content | 28 | 31 | 31 |
| Color | Yellow | Yellow | Yellow |
| Viscosity (1) | 700 | 205 | 210 |
| Viscosity (2) | 2,000,000 | 930,000 | 990,000 |
| Product stability | 4 | 5 | 5 |
| Sensory properties | 3 | 4 | 3 |
| SPF index | 60 | 65 | 66 |

**[Table 9]**

| | Comparative Example | | | |
|---|---|---|---|---|
| | 1 | 2 | 3 | 4 |
| Appearance | - | Transparent-opaque paste | Transparent-opaque paste | Transparent-opaque paste |
| Gel content | 31 | 32 | 31 | 31 |
| Color | - | - | Yellow | Yellow |
| Viscosity (1) | - | >100 | 520 | 202 |
| Viscosity (2) | - | 500,000 | - | 530,000 |
| Product stability | - | 3 | 1 | 3 |
| Sensory properties | - | 3 | 1 | 1 |
| SPF index | - | 30 | - | 35 |

According to each of Examples 1 to 15, an SPF index was at least 42, and the excellent product stability and the excellent sensory properties were exhibited.

In contrast, according to Comparative Example 1, which does not include the platinum catalyst, the modified organohydrogen polysiloxane copolymer blend was not prepared.

According to Comparative Example 2 not including the benzotriazole-based compound, the lower SPF index was exhibited. According to Comparative Example 3 including the benzotriazole-based compound having the content of greater than 10 wt%, the significantly inferior sensory properties and the significantly inferior product stability were exhibited while the SPF index was not measured.

According to Comparative Example 4 including the organopolysiloxane having the content of an alkenyl group of less than 0.006 mmol/g, the crosslink density was decreased due to the lower content of the alkenyl group, such that the sensory properties and the SPF index were inferior.

## Claims

1. A crosslinked organopolysiloxane copolymer blend, which is prepared, in presence of a platinum catalyst, by reacting an organohydrogen polysiloxane including a hydrogen atom bonded to at least one silicon atom in a molecule, organopolysiloxane including a reactive unsaturated group at opposite terminals of the organopolysiloxane, and a benzotriazole-based compound including a reactive unsaturated group,
wherein the benzotriazole-based compound has a content of at most 10.0 wt% in the crosslinked organopolysiloxane copolymer blend.

2. The crosslinked organopolysiloxane copolymer blend of claim 1, wherein the organohydrogen polysiloxane is represented by following Chemical Formula 1, 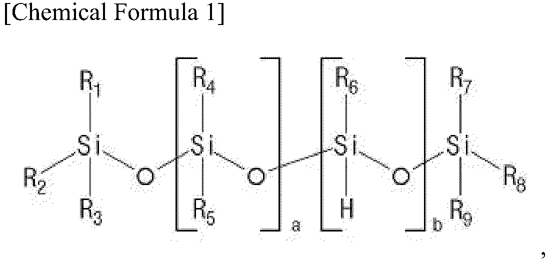
in which, in Chemical formula 1,
Each of R₁ to R₉ is independently a C1-C10 alkyl group,
a is an integer ranging from 5 to 250, and
b is an integer ranging from 1 to 150.

3. The crosslinked organopolysiloxane copolymer blend of claim 1, wherein the organopolysiloxane including the reactive unsaturated group is represented by following Chemical Formula 2, 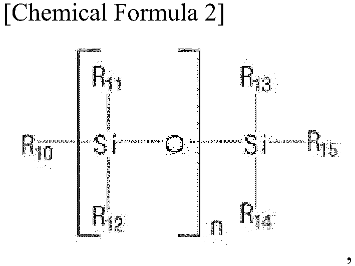
in which, in Chemical formula 2,
each of R₁₀ and R₁₅ are independently a C2-C5 alkenyl group,
each of R₁₁ to R₁₄ is independently a C1-C10 alkyl group, and
n is an integer ranging from 1 to 600.

4. The crosslinked organopolysiloxane copolymer blend of claim 1, wherein the benzotriazole-based compound including the reactive unsaturated group is represented by following Chemical Formula 3, 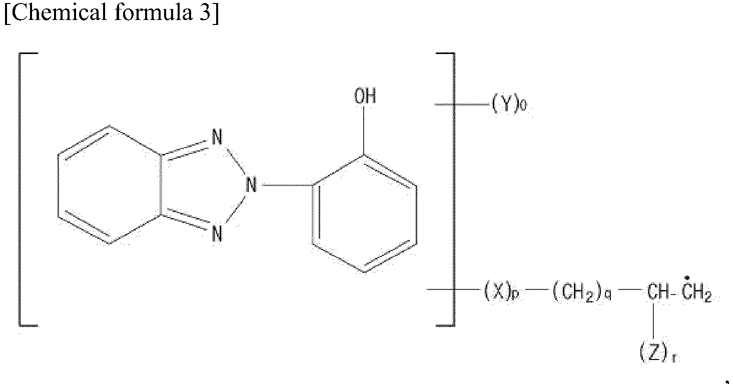
in which, in Chemical formula 3,
Y is at least one selected from a C1-C8 alkyl group, a halogen group, and a C1-C4 alkoxy group,
X is O or NH,
Z is hydrogen or a C1-C4 alkyl group, and
o is an integer from 0 to 3, each of r and p is 0 or 1, and q is an integer ranging from 1 to 10.

5. The crosslinked organopolysiloxane copolymer blend of claim 1, wherein the crosslinked organopolysiloxane copolymer blend is represented by following Chemical Formula 4, 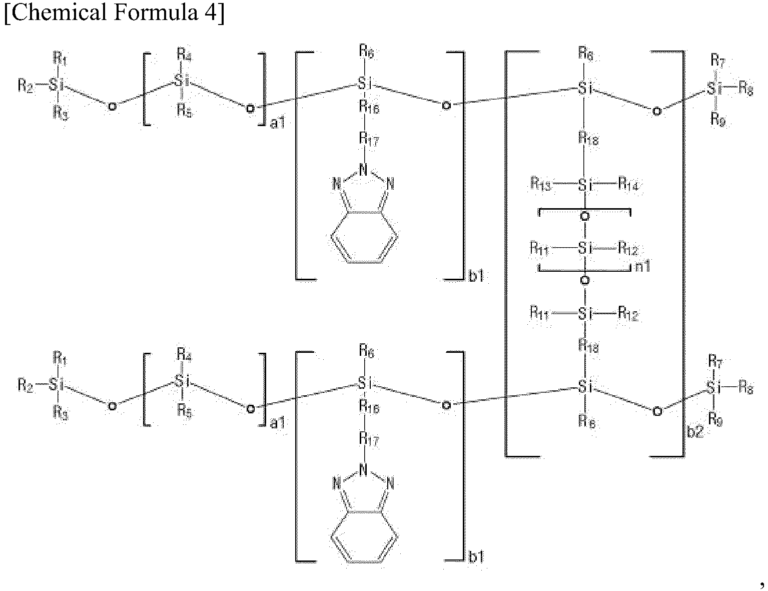
in which, in Chemical formula 4,
each of R₁ to R₉ is independently a C1-C10 alkyl group,
each of R₁₁ to R₁₄ is independently a C1-C10 alkyl group,
R₁₆ and R₁₈ are each independently a C2-C5 alkylene group,
R₁₇ is a C1-C3 alkyl group or a C6-C8 arylene group substituted with a hydroxy group,
a1 is an integer ranging from 10 to 250,
n1 is an integer ranging from 5 to 1,000, and
each of b1 and b2 is independently an integer ranging from 1 to 150.

6. A gel composition including a crosslinked organopolysiloxane copolymer blend according to Claim 1.

7. The gel composition of claim 6, wherein the crosslinked organopolysiloxane copolymer blend is included in a content ranging from 10 wt% to 60 wt%, based on a total weight of the gel composition.
